# EUROPÄISCHE PATENTANMELDUNG

(11) **EP 2 664 231 A1**
(43) Veröffentlichungstag der Anmeldung: **20.11.2013**
(21) Anmeldenummer: 12168550.7
(22) Anmeldetag: 18.05.2012
(51) Int. Cl.: A01G 9/14, E04H 15/20, E04H 15/64

(54) **Klemmprofil für Foliendachkonstruktion**

(71) Anmelder: Taiyo Europe GmbH, 82054 Sauerlach (DE)
(72) Erfinder: Klein, Ingo, 83026 Rosenheim (DE)
(74) Vertreter: Bettinger Schneider Schramm

(57) **Zusammenfassung**

Gegenstand der Erfindung ist ein Klemmprofil (1) für eine Foliendachkonstruktion, aufweisend ein unteres Profilelement (2) und ein oberes Profilelement (3), wobei das untere Profilelement (2) Vorrichtungen (5) aufweist, über die es mit einer Tragkonstruktion fest verbindbar ist und wobei das untere Profilelement (2) mindestens eine Ausnehmung (6) zur Aufnahme einer Folienhalterung (7) aufweist, die mindestens eine mit dieser verbundene innere Folie (8a, 8b, 8c) gegen das Herausrutschen aus dem Klemmprofil (1) sichert, wobei das Klemmprofil (1) ein Mittelprofilelement (11) aufweist, welches mindestens eine Ausnehmung (14) zur Aufnahme einer Folienhalterung (15) aufweist, die mindestens eine mit dieser verbundene äußere Folie (16) gegen das Herausrutschen aus dem Klemmprofil (1) sichert, wobei das obere Profilelement (3) mit dem Mittelprofilelement (11) über eine Befestigungsvorrichtung (13) verbindbar ist, und wobei zwischen Mittelprofilelement (11) und unterem Profilelement (2) mindestens ein Trennelement (10, 10') vorhanden ist, so dass das Mittelprofilelement (11) vom unteren Profilelement (2) und die mindestens eine äußere Folie (16) von der mindestens einen inneren Folie (8a, 8b, 8c) beabstandet ist, wobei das Mittelprofilelement (11) mit einer weiteren Befestigungsvorrichtung (12) mit dem unteren Profilelement (2) verbindbar ist, und wobei das mindestens eine Trennelement (10) die Folienhalterung (7) für die mindestens eine innere Folie (8a, 8b, 8c) so überdeckt, dass das Trennelement (10) über die weitere Befestigungsvorrichtung (12) die Folienhalterung (7) zusätzlich fixiert und die mindestens eine innere Folie (8a, 8b, 8c) im Zusammenwirken mit dem unteren Profilelement (2) führt.

## Beschreibung

Die Erfindung betrifft ein Klemmprofil für eine Foliendachkonstruktion, welches ein unteres und ein oberes Profilelement aufweist, wobei das untere Profilelement Vorrichtungen aufweist, über die es mit einer Tragkonstruktion fest verbindbar ist und wobei das untere Profilelement mindestens eine Ausnehmung zur Aufnahme einer Folienhalterung aufweist, die mindestens eine mit dieser verbundenen innere Folie gegen das Herausrutschen aus dem Klemmprofil sichert.

Derartige Klemmprofile sind aus dem Stand der Technik bekannt, wobei an die bekannten Klemmprofile auch mehrere Folien eingespannt werden können, die das Klemmprofil an einer gemeinsamen Stelle verlassen und die durch Eintrag von Luft und kissenförmige Elemente bilden.

Nachteilig an derartigen Klemmprofilen ist, dass der Austausch der Folien nicht einzeln vorgenommen werden kann, insbesondere dass die äußere Folie, die stärkerem Verschleiß und möglichen Schäden, etwa durch Hagelschlag, ausgesetzt ist, nur zusammen mit den anderen Folien getauscht werden kann.

Diesen Nachteil weisen auch andere Klemmprofile der eingangs genannten Art auf, die ebenfalls im Stand der Technik bekannt sind und die für jede Seite zwei separate Folienhalterungen aufweisen, so dass eine äußere Folie im Prinzip unabhängig von der oder den inneren Folien getauscht werden kann. Dabei liegt etwa eine zweite Folienhalterung neben oder über der ersten Folienhalterung und wird gemeinsam von dem äußeren Profil gehalten, in der Regel durch Klemmung. Auch diese Konstruktion hat den Nachteil, dass eine einzelne, insbesondere äußere, Folie nicht entfernt und damit ausgewechselt werden kann, ohne zumindest die Halterung für die übrigen Folien gleichzeitig zu lösen.

Der Erfindung liegt daher die Aufgabe zugrunde, ein Klemmprofil für eine Foliendachkonstruktion sowie eine entsprechende Foliendachkonstruktion zur Verfügung zu stellen, welche es konstruktiv ermöglicht, eine einzelne äußere Folie einer Foliendachkonstruktion so anzubringen, dass diese mit verringertem Aufwand getauscht werden kann.

Diese Aufgabe wird durch ein Eingangs genanntes Klemmprofil gelöst, bei dem ein zusätzliches Mittelprofilelement vorhanden ist, welches eine Ausnehmung zur Aufnahme einer Folienhalterung aufweist, die mindestens eine mit dieser verbundenen äußere Folie gegen das Herausrutschen aus dem Klemmprofil sichert, wobei das obere Profilelement lediglich mit dem Mittelprofilelement über eine Befestigungsvorrichtung verbindbar ist und wobei zwischen dem Mittelprofilelement und dem unteren Profilelement zusätzlich ein Trennelement vorhanden ist, so dass das Mittelprofilelement vom unteren Profilelement und damit auch die mindestens eine äußere Folie von der mindestens einen inneren Folie beabstandet ist, wobei das Mittelprofilelement in einer weiteren Befestigungsvorrichtung mit dem unteren Profilelement verbindbar ist und wobei das mindestens eine Trennelement die Folienhalterung für die mindestens eine innere Folie so überdeckt, dass das Trennelement über die weitere Befestigungsvorrichtung die Folienhalterung zusätzlich fixiert und die mindestens eine innere Folie im Zusammenwirken mit dem unteren Profilelement führt.

Mit derartigen Klemmelementen lassen sich besonders leicht Dachkonstruktionen realisieren, bei denen eine äußere, von den inneren Folien beabstandete und bevorzugt als Hagelschutzfolie fungierende Folie vor die Hauptkonstruktion gespannt werden kann.

Vorteilhafte Ausgestaltungen der Erfindung sind in den Unteransprüchen erläutert.

So ist es etwa vorteilhaft, wenn das Trennelement thermisch isolierendes Material, bevorzugt EPDM oder Purit, aufweist, wobei das Trennelement vorzugsweise mehrteilig, besonders bevorzugt zweiteilig ausgestaltet ist. Günstig ist es darüber hinaus, wenn mindestens ein Dichtelement vorhanden ist, welches den Foliendurchgangsbereich unterhalb des oberen Profilelementes und/oder generell im Bereich des Austritts der Folien aus dem Klemmprofil abdichtet.

Die einzelnen Teile des Klemmprofils, also insbesondere oberes und unteres Profilelement und das Mittelprofilelement weisen vorzugsweise jeweils oder gemeinsam Metall, vorzugsweise Aluminium auf.

Um die Folienhalterung besser und leichter in das Klemmprofil einsetzen zu können, weisen die Folienhalterungen vorzugsweise eine Nut zur Aufnahme von Werkzeug auf. Andere geeignete Ansatzpunkte für Werkzeug sind ebenfalls möglich.

Das obere Profilelement wird vorzugsweise über eine Schraubverbindung mit dem Mittelprofilelement verbunden, wobei es günstig sein kann, wenn oberhalb des oberen Profilelementes eine Halterung vorhanden ist. Diese Halterung kann etwa Drähte aufnehmen, die zwischen den einzelnen Halterungen gespannt sind und die vorzugsweise dazu dienen, Vögel von den Folien fernzuhalten. Das Mittelprofilelement ist vorzugsweise ebenfalls über Schraubverbindungen mit dem unteren, die Verbindung zum Tragwerk herstellenden Profilelement verbunden. Gegenstand der Erfindung ist darüber hinaus eine Foliendachkonstruktion mit einer separaten Hagelschutzfolie, die Klemmprofile der eben beschriebenen Art aufweist. Gegenstand ist auch ein Foliendach mit Klemmprofilen der eingangs beschriebenen Art, wobei die äußere Folienkonstruktion zwei beabstandete Folien aufweist, von denen eine als Isolierlage dient. Besonders bevorzugt weist die Foliendachkonstruktion zwischen den beiden äußeren Folien einen festen Isolierkern auf.

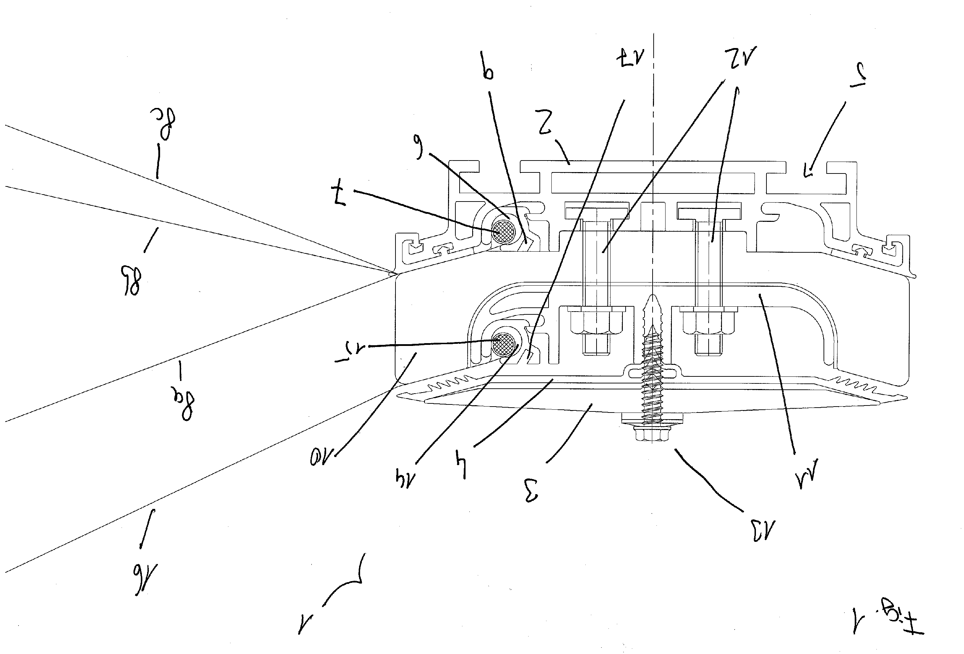

Eine Ausgestaltung der Erfindung wird nachfolgend unter Bezugnahme auf **Figur 1**, die ein erfindungsgemäßes Klemmprofil im Schnitt zeigt, im Detail erläutert.

Figur 1 zeigt zunächst ein unteres Profilelement 2, welches Kanäle 5 aufweist, über die es an einer hier nicht gezeigten Tragkonstruktion stabil befestigt werden kann. In Ausnehmungen 6 des unteren Profilelementes 2 befinden sich Folienhalterungen 7. In Figur 1 ist dabei ein Klemmprofil mit Folienhalterung auf nur einer Seite gezeigt. In einer anderen, hier nicht gezeigten, Ausführungsform befinden sich Folienhalterungen auf beiden Seiten des Klemmprofils.

Bei der Folienhalterung selbst handelt es sich in der Regel um stangenförmige Gebilde, um die die zu halternde Folie schlaufenförmig herumgewickelt ist. Im gezeigten Ausführungsbeispiel wird von der Folienhalterung 7 ein Folienkissen gehaltert, welches aus drei Folien 8a, 8b und 8c besteht. Das Kissen wird durch Einbringung von Luft nach der Montage aufgespannt, wobei das Kissen die Form einnimmt, die durch die Form der Folien vorgegeben ist.

Auf dem unteren Profilelement 2 sitzt ein Trennelement 10, welches vorzugsweise aus stabilem, aber gleichzeitig isolierendem Material, wie etwa EPDM oder Purit besteht. Dieses Trennelement 10 wird über ein Mittelprofilelement 11 und Schrauben 12 gegen das untere Profilelement verspannt und damit befestigt. Mit dieser Befestigung sind die inneren Folien 8a, 8b und 8c, gehalten von der Folienhalterung 7, ausreichend stabil befestigt und an der hier nicht gezeigten Tragkonstruktion über die Befestigung des unteren Profilelementes angebunden. In der in Figur 1 gezeigten Variante besteht das Trennelement 10 aus drei Teilen, nämlich zwei äußeren und einem mittleren Teil. Dies ist jedoch nicht zwingend. Das Trennelement 10 kann etwa auch aus nur einem oder aus zwei Teilen bestehen.

Das Mittelprofilelement 11, welches vorzugsweise aus Metall, im Idealfall aus Aluminium, besteht, weist in der Mitte einen Schraubkanal auf, in den eine Schraube 13 eingedreht werden kann, mit der das obere Profilelement 3 am Mittelprofilelement 11 befestigt werden kann. Im Mittelprofilelement 11 finden sich darüber hinaus Ausnehmungen 14 für eine Folienhalterung 15 am Mittelprofilelement, mit der ein oder mehrere Folien 16 gehaltert werden können. Auch hier können die Folienhalterungen auf beiden Seiten des Klemmprofils vorhanden sein, so dass das Foliendach nach beiden Seiten des Klemmprofils aufgespannt werden kann.

Da das Mittelprofilelement 11 über das Trennelement 10 vom unteren Profilelement 2 beabstandet ist und daher auch die beiden Folienhalter 7 und 15 einen Abstand voneinander aufweisen, ist auch die Folie 16 von den Folien 8a, 8b und 8c räumlich voneinander getrennt. Da das obere Profilelement 3 die äußere Seite der Foliendachkonstruktion bildet, ist die Folie 16 die äußerste Folie einer mit derartigen Klemmprofilen und Folien aufgebauten Dachkonstruktion. Dabei können auch im äußeren Bereich mehrere Folien vorhanden sein und dort etwa weitere Kissen bilden. Der häufigste Anwendungsfall wird aber eine einzelne äußere Folie sein, die als Hagelschutzfolie wirkt.

Bei Foliendachkonstruktionen ist häufig das Problem, dass Witterungseinflüsse, insbesondere Hagelschlag, die äußere Folie beschädigen. In der Folge wird daher ein Austausch der äußeren Folie notwendig.

Bei der Herstellung einer Foliendachkonstruktion mit Folien und Klemmprofilen, wie in Figur 1 gezeigt, kann die äußere Folie 16 als Hagelschutzfolie verwendet werden. Bei Hagelschlag werden die Hagelkörner in der Regel von der äußeren Folie so stark abgebremst, dass an den inneren Folien kein Schaden mehr auftritt. Im Ergebnis genügt es daher die äußere Folie zu tauschen. Dies ist mit dem erfindungsgemäßen Klemmprofil besonders einfach.

Nach Lösen der Schrauben 13 kann das obere Profilelement 3 abgenommen werden. Die Folienhalterung 15, mit der die äußere Folie 16 gehalten wird, ist nunmehr zugänglich und kann, etwa unter Zuhilfenahme geeigneten Werkzeugs, welches mit der Werkzeugnut 17 in Eingriff gebracht wird, entfernt werden. Nach Austausch der Folie wird die Folienhalterung 15 wieder in das Mittelprofilelement 11 eingesetzt und das obere Profilelement 3 über die Schrauben 13 wieder mit dem Mittelprofilelement verbunden, womit der Austausch der Folie beendet ist.

Während des gesamten Vorgangs bleiben die Schrauben 12, die das Mittelprofilelement über das Trennelement 10 mit dem unteren Profilelement 2 verbinden, fest angezogen, so dass die Halterung 7 der inneren Folien 8a, 8b und 8c zu keinem Zeitpunkt des Austauschs der äußeren Folie gelöst oder auch nur zugänglich werden.

Die Verwendung einer äußeren Folie 16 mit dem beschriebenen Klemmprofil hat noch weitere Vorteile. So wirkt der Luft gefüllte Raum zwischen den Folien 8a, 8b und 8c und der äußeren Folie 16 isolierend. Diese Isolierwirkung wird dann besonders verstärkt und unterstützt, wenn das Trennelement 10 ebenfalls isolierend wirkt, etwa weil es zumindest zum Teil aus isolierendem Material besteht oder sehr filigran aus Metall aufgebaut ist, um die Wärmeleitung zu verringern.

Die Verwendung einer separaten äußeren Hagelschutzfolie, die mit dem erfindungsgemäßen Klemmprofil ermöglicht wird, hat jedoch noch weitere Vorteile. So kann die äußere Folie farblich anders gestaltet sein oder etwa Werbeaufdrucke aufweisen. Da derartige äußere Gestaltungen einem schnelleren zeitlichen Wandel unterliegen als die Konstruktion selbst, kann eine Dachkonstruktion unter Verwendung der erfindungsgemäßen Klemmprofile schnell optisch vollkommen verändert werden, indem isoliert die äußeren Folien ausgetauscht werden.

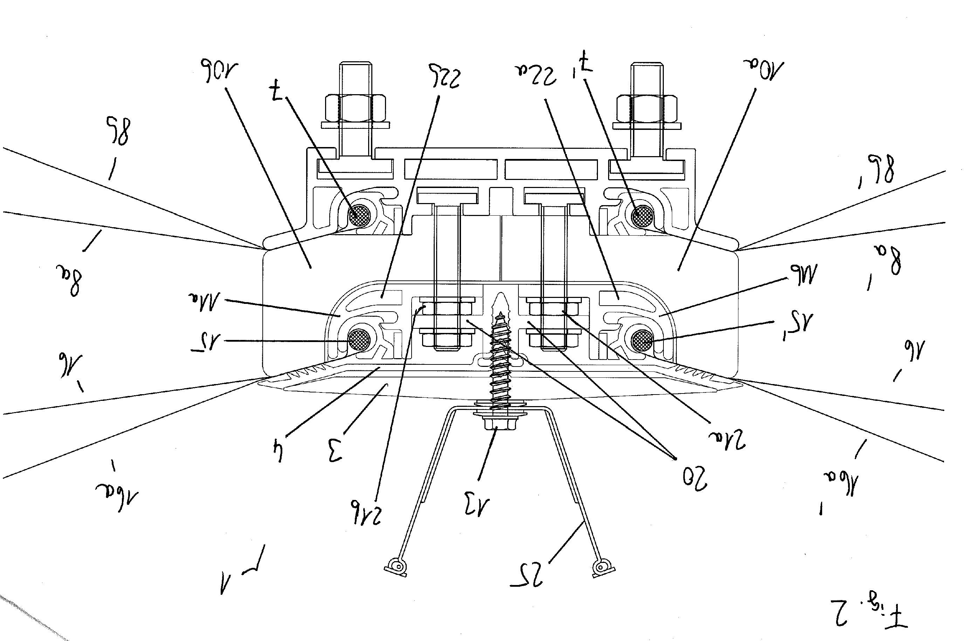

**Figur 2** zeigt eine weitere Ausgestaltung der Erfindung, bei der das Mittelprofilelement 11 in drei Teile, nämlich in zwei äußere Teile 11a, 11b und ein mittleres, hier kreuzförmiges Teil 20 geteilt ist.

Die beiden Teile 11a, 11b des Mittelprofilelementes sind dabei separat mit den Schrauben 21a, 21b mit dem unteren Profilelement verbunden. Damit sind bereits die inneren Folien 8a, 8b und 8a', 8b' fixiert. Da die beiden Teile 11a, 11b zusammen mit den jeweiligen Teilen 10a, 10b des Trennelementes separat gelöst und befestigt werden können, ist die Montage oder der Austausch auch der inneren Folien auch auf nur einer Seite des Profilelementes möglich.

Zwischen die beiden äußeren Teile 11a, 11b des Mittelprofilelementes wird der mittlere, kreuzförmige Bestandteil 20 des Mittelprofilelementes, bevorzugt mit denselben Schrauben 21a, 21b unter Verwendung weiterer Muttern befestigt. Dieses mittlere Element 20 beinhaltet den Schraubkanal, über den mit der Schraube 13 das obere Profilelement 3 zusammen mit der Dichtung 4 befestigt ist. Damit werden gleichzeitig die Halterungen 15, 15' der äußeren Folien - die bei dieser Konstruktion ebenfalls auf beiden Seiten getrennt getauscht werden können - fixiert.

Das Trennelement 10 ist bei dieser Ausführungsform ebenfalls längs in zwei Teile 10a und 10b geteilt. Dies ermöglicht insgesamt das Arbeiten an den Folien und der Folienhalterung lediglich an einer Seite des Klemmprofils, da die Befestigung an der jeweils anderen Seite des Klemmprofils bei einer geteilten Konstruktion nicht gelöst werden muss.

An dem oberen Profilelement 3 ist über die Befestigungsschraube 13 eine Halterung 25 fixiert. Diese Halterung dient vorzugsweise der Aufnahme von Drähten (nicht gezeigt), die entlang und zwischen den einzelnen Profilelementen gespannt werden. Damit kann verhindert werden, dass sich etwa Vögel auf den Profilelementen niederlassen und von dort aus die Folien, insbesondere die beiden äußeren Folien 16 und 16a, zu zerstören.

Es kann auch günstig sein, wenn zwischen den beiden äußeren Folien 16, 16a eine Isolierung, vorzugsweise ein fester Isolierkern eingebracht wird. Ein solcher fester Kern verbessert nicht nur die Isolationseigenschaften der Foliendachkonstruktion, sondern erhöht gleichzeitig die Stabilität und damit die Haltbarkeit der äußeren Folie.

### Bezugszeichenliste

- 1.: Klemmprofil
- 2.: unteres Profilelement
- 3.: oberes Profilelement
- 4.: Dichtung
- 5.: Befestigungsnut
- 6.: Ausnehmung
- 7.: Folienhalterung
- 8.: drei Lagen (8a, 8b und 8c) innere Folie für 3-lagiges ETFE Dach
- 9.: Nut für Werkzeug
- 10.: Trennelement
- 11.: Mittelprofilelement
- 12.: Befestigungselement für Mittelprofilelement
- 13.: Befestigungselement für oberes Profilelement
- 14.: Ausnehmung am Mittelprofilelement
- 15.: Folienhalterung am Mittelprofilelement
- 16.: äußere Folie (Hagelschutzfolie)
- 17.: Nut für Werkzeug am Mittelprofilelement
- 20.: kreuzförmiger Bestandteil des Mittelprofilelementes
- 21.: Befestigungselement mit zwei separaten Muttern
- 25.: Halterung für Drähte

## Patentansprüche

1. Klemmprofil (1) für eine Foliendachkonstruktion, aufweisend ein unteres Profilelement (2) und ein oberes Profilelement (3), wobei das untere Profilelement (2) Vorrichtungen (5) aufweist, über die es mit einer Tragkonstruktion fest verbindbar ist und wobei das untere Profilelement (2) mindestens eine Ausnehmung (6) zur Aufnahme einer Folienhalterung (7) aufweist, die mindestens eine mit dieser verbundene innere Folie (8a, 8b, 8c) gegen das Herausrutschen aus dem Klemmprofil (1) sichert, **dadurch gekennzeichnet, dass** das Klemmprofil (1) ein Mittelprofilelement (11) aufweist, welches mindestens eine Ausnehmung (14) zur Aufnahme einer Folienhalterung (15) aufweist, die mindestens eine mit dieser verbundene äußere Folie (16) gegen das Herausrutschen aus dem Klemmprofil (1) sichert, wobei das obere Profilelement (3) mit dem Mittelprofilelement (11) über eine Befestigungsvorrichtung (13) verbindbar ist, und wobei zwischen Mittelprofilelement (11) und unterem Profilelement (2) mindestens ein Trennelement (10, 10') vorhanden ist, so dass das Mittelprofilelement (11) vom unteren Profilelement (2) und die mindestens eine äußere Folie (16) von der mindestens einen inneren Folie (8a, 8b, 8c) beabstandet ist, wobei das Mittelprofilelement (11) mit einer weiteren Befestigungsvorrichtung (12) mit dem unteren Profilelement (2) verbindbar ist, und wobei das mindestens eine Trennelement (10) die Folienhalterung (7) für die mindestens eine innere Folie (8a, 8b, 8c) so überdeckt, dass das Trennelement (10) über die weitere Befestigungsvorrichtung (12) die Folienhalterung (7) zusätzlich fixiert und die mindestens eine innere Folie (8a, 8b, 8c) im Zusammenwirken mit dem unteren Profilelement (2) führt.

2. Klemmprofil (1) nach dem vorhergehenden Anspruch, **dadurch gekennzeichnet, dass** das Trennelement (10) thermisch isolierendes Material, bevorzugt EPDM oder Purit, aufweist.

3. Klemmprofil nach einem der vorhergehenden Ansprüche, **dadurch gekennzeichnet, dass** das Trennelement aus mehreren, bevorzugt zwei Teilen (10a, 10b) besteht.

4. Klemmprofil (1) nach einem der vorhergehenden Ansprüche, **dadurch gekennzeichnet, dass** es ein Dichtelement (4) aufweist, welches den Foliendurchgangsbereich unterhalb des oberen Profilelementes (3) abdichtet.

5. Klemmprofil (1) nach einem der vorhergehenden Ansprüche, **dadurch gekennzeichnet, dass** das mindestes eins der nachfolgenden Elemente Metall, vorzugsweise Aluminium aufweist:
- Oberes Profilelement (3),
- Unteres Profilelement (2)
- Mittelprofilelement (11).

6. Klemmprofil (1) nach einem der vorhergehenden Ansprüche, **dadurch gekennzeichnet, dass** mindestes eine der Ausnehmungen (6, 14) eine Nut (5, 17) zur Aufnahme von Werkzeug aufweist.

7. Klemmprofil (1) nach einem der vorhergehenden Ansprüche, **dadurch gekennzeichnet, dass** die Befestigungsvorrichtung (13) eine Schraubverbindung aufweist.

8. Klemmprofil nach einem der vorhergehenden Ansprüche, **dadurch gekennzeichnet, dass** es oberhalb des oberen Profilelementes (3) eine Halterung (25) zur Befestigung von Drähten aufweist.

9. Foliendach, aufweisend eine innere Folienkonstruktion und mindestes eine, von der inneren Folienkonstruktion getrennte äußere Folie, die als Hagelschutzfolie wirkt, wobei die Folien wenigstens teilweise von Klemmprofilen nach einem der vorhergehenden Ansprüche gehalten werden.

10. Foliendach, aufweisend eine innere Folienkonstruktion und mindestes eine, von der inneren Folienkonstruktion getrennte äußere Folienkonstruktion, wobei die äußere Folienkonstruktion zwei beabstandete Folien aufweist, von denen eine als Isolierlage dient, wobei die Folien wenigstens teilweise von Klemmprofilen nach einem der vorhergehenden Ansprüche gehalten werden.

11. Foliendach nach dem vorherigen Anspruch, welches zwischen den beiden Folien der äußeren Folienkonstruktion einen festen Isolierkern (30) aufweist.
